# EUROPÄISCHE PATENTSCHRIFT

(11) **EP 1 986 487 B1**
(45) Veröffentlichungstag und Bekanntmachung des Hinweises auf die Patenterteilung: **23.05.2012**
(21) Anmeldenummer: 07701316.7
(22) Anmeldetag: 13.02.2007
(51) Int. Cl.: A01G 23/00, B65B 27/10

(54) **Materialbündler**
Material bundler
Cercleuse

(30) Priorität: 13.02.2006 AT 2232006
(43) Veröffentlichungstag der Anmeldung: 05.11.2008
(73) Patentinhaber: Fuchsluger, Josef, 3340 Waidhofen/Ybbs (AT); Fuchsluger, Florian, 3340 Waidhofen/Ybbs (AT); Fuchsluger, Christophe, 3340 Waidhofen/Ybbs (AT)
(72) Erfinder: Fuchsluger, Josef, 3340 Waidhofen/Ybbs (AT); Fuchsluger, Florian, 3340 Waidhofen/Ybbs (AT); Fuchsluger, Christophe, 3340 Waidhofen/Ybbs (AT)
(74) Vertreter: Schwarz & Partner
(86) Internationale Anmeldenummer: PCT/AT2007/000072
(87) Internationale Veröffentlichungsnummer: WO 2007/092979

(56) Entgegenhaltungen:
- EP-A1- 1 563 726
- WO-A-89/00808
- CA-A1- 2 411 393
- FR-A- 2 881 705

## Beschreibung

Die Erfindung betrifft einen Materialbündler, insbesondere Restholzbündler, gemäβ dem Oberbegriff des Anspruchs 1. Ein solcher Materialbündler ist aus dem Dokument EP1 563 726 A1 bekannt .

Aus dem Stand der Technik ist ein Restholzbündler bekannt, der ein mehrachsiges Fahrwerk mit Antrieb, einen Kran und auf einer Ladefläche eine Verdichteinrichtung aufweist. Ein Restholzbündler dieser Art weist nicht nur hohe Anschaffungskosten, sondern auch hohe Betriebskosten auf, und er ist auch nur durch ein hochqualifixiertes Fachpersonal zu bedienen, zumal die Beschickung mit Material wegen eines kontinuierlichen Einzuges der Verdichteinrichtung exakt vorgenommen werden muß.

Infolge des kontinuierlichen Verdichtens ist es weiters unbedingt notwendig, mit einer Säge den durch das Verdichten gebildeten Strang in Stück vorbestimmter Länge abzuschneiden, was je nach Beschaffenheit des Holzes problematisch sein kann.

Die Amortisation eines solchen Restholzverdichters ist - wenn überhaupt - nur bei 10%iger Auslastung gegeben, da der Fahrantrieb und der Kranantrieb hohe Kosten verursachen.

Die Erfindung bezweckt die Vermeidung dieser Nachteile und Schwierigkeiten und stellt sich die Aufgabe, eine Einrichtung der eingangs beschriebenen Art zu schaffen, die nur geringe Investitionskosten und eine einfache und auch automatisierbare Bedienung erfordert und die sich auch bei nicht 100%iger Auslastung amortisiert. Zudem sollen eine hohe Betriebssicherheit und eine geringe Störanfälligkeit gegeben sein.

Diese Aufgabe wird erfindungsgemäß durch die Kombination folgender Merkmale gelöst:
- einen Rahmen mit darauf montierter; von mindestens zwei Armen, die relativ zueinander und auseinander bewegbar sind, gebildeten Klemmvorrichtung,
- einen entlang des Rahmens verbringbaren Umreifungsrahmen, der aus einer Warteposition an einem Ende des Rahmens in mindestens zwei Arbeitspositionen beiderseits der Klemmvorrichtung bzw. beiderseits der Klemmvorrichtungen bringbar ist, wobei
- der Umreifungsrahmen einen zumindest geringfügig größeren Innendurchmesser aufweist als die in Klemmposition zueinander bewegten Arme der Klemmvorrichtung, sodaß der Umreifungsrahmen über die Klemmvorrichtung bringbar ist.

Bevorzugte Ausführungsformen sind in den Unteransprüchen gekennzeichnet.

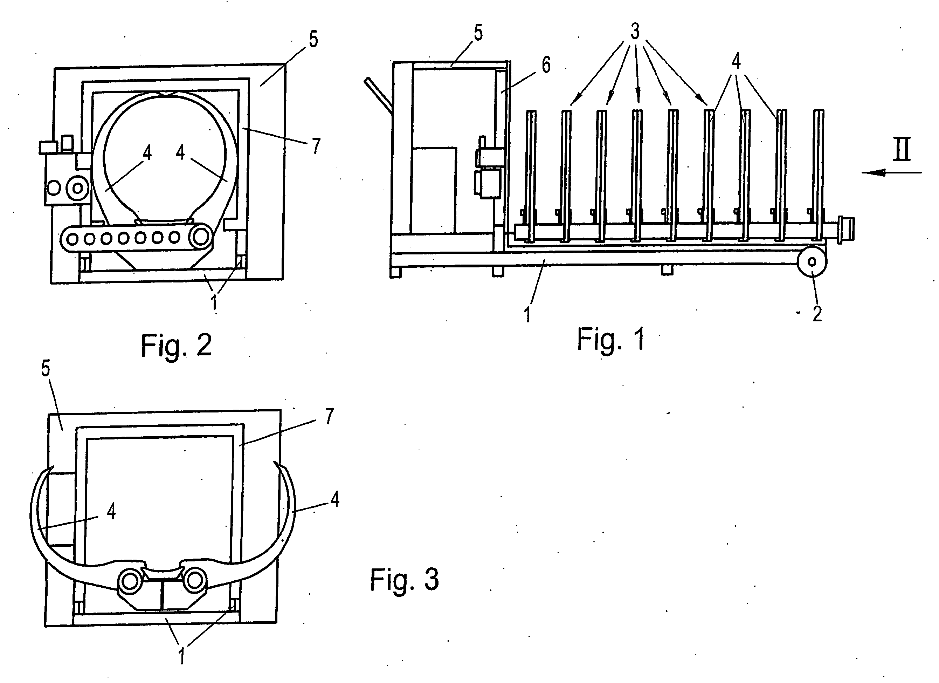

Die Erfindung ist nachfolgend anhand der Zeichnung, die die Einrichtung schematisch veranschaulicht, näher erläutert. Fig. 1 ist eine Seitenansicht, Fig. 2 eine Ansicht in Richtung des Pfeiles II der Fig. 1 und Fig. 3 eine Darstellung gemäß Fig. 2, jedoch mit geöffneten Schwenkarmen unter Weglassung einiger Details.

Der Materialverdichter weist einen Rahmen 1 auf, der an einem Ende mit Rädern 2 zum einfachen Verbringen ausgestattet ist. Entlang des Rahmens 1 sind sich quer zu dessen Längserstreckung erstreckende und jeweils eine Klemmvorrichtung bildende Armpaare 3 vorgesehen, gebildet von jeweils zwei hydraulisch gegeneinander und auseinander bewegbaren Armen 4. An einem Ende des Rahmens 1 ist ein Gehäuse 5 angeordnet, in dem ein Umreifungsrahmen 6 vorgesehen ist, der durch eine schlitzartige Öffnung 7 des Gehäuses 5 aus diesem hervortreten kann und entlang des Rahmens 1 verfahr- oder verschiebbar ist, u.zw. mittels einer nicht näher dargestellten Antriebsvorrichtung (z.B. hydraulisch oder elektrisch).

Der kleinste Innendurchmesser des Umreifungsrahmens 6 ist zumindest geringfügig größer bemessen als die in Klemmposition (Fig. 2) gebrachten Arme 4 der Klemmeinrichtungen, so daß der Umreifungsrahmen 6 entlang des gesamten Rahmens 1 bei in geschlossener Position befindlichen Armen 4 bewegbar ist und jeweils vor und/oder nach einem Armpaar 3 Bänder oder Schnüre um ein von den Armen 4 umfaßtes Bündel legen kann.

Am Ende des Rahmens 1, das dem Gehäuse 5 vis à vis liegt, ist eine Schneideinrichtung, gebildet von einer Kettensäge, vorgesehen, um vorstehendes Material zu kappen, so daß ein Bündel mit vorbestimmter Länge gebildet wird. Das andere Ende des Bündels wird durch Anstoßen des Materials an der Frontplatte des Gehäuses gebildet.

Der Materialbündler wird mittels eines Ladegerätes, z.B. einem auf einem LKW befindlichen Kran, befüllt, u.zw. bei geöffneten Armen 4 (vgl. Fig. 3). Nach Komprimieren des Materials durch Zueinanderbewegen der Arme 4 (Fig. 2), gegebenenfalls Kappen des Endes des Bündels und nach Binden durch den Umreifungsrahmen 6 werden die Arme 4 auseinanderbewegt, wie in Fig. 3 dargestellt, und das Bündel kann mit dem Ladegerät entnommen werden. Der Antrieb des Materialbündlers kann mit einem Stromaggregat am Stromnetz oder auch hydraulisch erfolgen.

Die Erfindung beschränkt sich nicht auf das in der Zeichnung dargestellte Ausführungsbeispiel. So ist es beispielsweise möglich, anstelle der Bewegung beider Arme 4 zueinander nur einen Arm zum anderen zu bewegen, um ein Bündel zu bilden, bzw. könnten auch anstelle eines Armpaares 3 drei Arme vorgesehen sein.

## Patentansprüche

1. Materialbündler, insbesondere Restholzbündler, umfassend:
• einen Rahmen (1) mit mindestens einer darauf montierten, von mindestens zwei Armen (4), die relativ zueinander und auseinander bewegbar sind, gebildeten Klemmvorrichtung (3), **gekennzeichnet durch**:
• einen entlang des Rahmens 1 verbringbaren Umreifungsrahmen (6), der aus einer Warteposition an einem Ende des Rahmens 1 in mindestens zwei Arbeitspositionen beiderseits der Klemmvorrichtung (3) bringbar ist, wobei
• der Umreifungsrahmen (6) einen zumindest geringfügig größeren Innendurchmesser aufweist als die in Klemmposition zueinander bewegten Arme (4) der Klemmvorrichtung (3), sodaß der Umreifungsrahmen (6) über die Klemmvorrichtung (3) bringbar ist.

2. Materialbündler nach Anspruch 1, **dadurch gekennzeichnet, daß** der Rahmen (1) eine Länge etwa entsprechend dem zu bildenden Bündel aufweist.

3. Materialbündler nach Anspruch 1 oder 2, **dadurch gekennzeichnet, daß** der Umreifungsrahmen (6) in der Warteposition sich in einem Gehäuse (5) befindet, das an einem Ende des Rahmens (1) angeordnet ist.

4. Materialbündler nach Anspruch 3, **dadurch gekennzeichnet, daß** der Umreifungsrahmen (6) mit einer Frontplatte mit der Gehäusevorderwand des Gehäuses (5) in eine Ebene bringbar ist, wobei das Antriebsaggregat des Umreifungsrahmens (6) im Inneren des Gehäuses (5) zu liegen kommt

5. Materialbündler nach einem der Ansprüche 1 bis 4, **dadurch gekennzeichnet, daß** zwei Arme (4) der Klemmvorrichtung (3) jeweils für sich aus einer geöffneten Aufnahmeposition für das Material in eine das Material klemmende Klemmposition bewegbar, vorzugsweise schwenkbar, sind.

6. Materialbündler nach einem der Ansprüche 1 bis 5, **dadurch gekennzeichnet, daß** an dem Ende des Rahmens (1) vis à vis der Warteposition des Umreifungsrahmens (6) eine Schneideinrichtung zum Begrenzen der Länge des Materialbündels, vorzugsweise eine Kettensäge, vorgesehen ist.

7. Materialbündler nach Anspruch 6, **dadurch gekennzeichnet, daß** eine Kettensäge vorgesehen ist, deren Länge so bemessen ist, daß sie bei Bewegen um eine Schwenkachse seitlich des Bündels die Querschnittsfläche des Bündels überstreicht.

8. Materialbündler nach einem der Ansprüche 1 bis 7, **dadurch gekennzeichnet, daß** eine Vielzahl von Klemmvorrichtungen (3) in Längsrichtung des Rahmens (1) im Abstand voneinander hintereinander vorgesehen ist.

9. Materialbündler nach einem der Ansprüche 1 bis 8, **dadurch gekennzeichnet, daß** die Arme (4) bogenförmig, vorzugsweise etwa halbkreisförmig, gestaltet sind.

10. Materialbündlers nach einem der Ansprüche 1 bis 9, **dadurch gekennzeichnet, daß** als Antriebe des Materialbündlers elektrische oder hydraulische Antriebe vorgesehen sind.

11. Materialbündler nach einem der Ansprüche 1 bis 10, **dadurch gekennzeichnet, daß** der Materialbündler mit einem Fahrwerk ausgestattet ist.

## Claims

1. A material bundler, in particular waste wood bundler, comprising:
• a frame (1) having at least one clamping device (3) mounted thereon and formed by at least two arms (4) that are movable to each other and apart from each other, **characterized by**:
• a reinforced frame (6) attachable along the frame (1), which may be moved from a waiting position at one end of the frame (1) into at least two working positions at both sides of the clamping device (3), wherein
• the reinforced frame (6) has an at least slightly larger internal diameter than the arms (4) of the clamping device (3) that are moved towards each other in the clamping position, so that the reinforced frame (6) may be moved across the clamping device (3).

2. A material bundler according to claim 1, **characterized in that** the frame (1) has a length approximately corresponding to the bundle to be formed.

3. A material bundler according to claim 1 or 2, **characterized in that** the reinforced frame (6) is in the waiting position in a housing (5), which is arranged at the end of the frame (1).

4. A material bundler according to claim 3, **characterized in that** the reinforced frame (6) may be moved with a front plate into a planar condition with the housing front wall of the housing (5), wherein the drive aggregate of the reinforced frame (6) is positioned within the housing (5).

5. A material bundler according to any of claims 1 to 4, **characterized in that** the two arms (4) of the clamping device (3) are separately movable and preferably pivotable from an opened receiving position for the material into a clamping position clamping the material.

6. A material bundler according to any of claims 1 to 5, **characterized in that** there is provided at the end of the frame (1) opposite of the waiting position of the reinforced frame (6) a cutting device for limiting the length of the material bundle, preferably a chain saw.

7. A material bundler according to claim 6, **characterized in that** there is provided a chain saw, the length of which is dimensioned so that it contacts the cross-sectional area of the bundle when moved about a swiveling axis laterally of the bundle.

8. A material bundler according to any of claims 1 to 7, **characterized in that** there is provided a plurality of clamping devices (3) in the longitudinal direction of the frame (1) spaced apart and one after the other.

9. A material bundler according to any of claims 1 to 8, **characterized in that** the arms (4) are shaped in the form of a bow, preferably in an approximately semi-circular form.

10. A material bundler according to any of claims 1 to 9, **characterized in that** there are provided as drive units of the material bundler electric or hydraulic drives.

11. A material bundler according to any of claims 1 to 10, **characterized in that** the material bundler is provided with an undercarriage.

## Revendications

1. Cercleuse, en particulier cercleuse pour résidus de bois, comprenant :
- un châssis (1) avec au moins un dispositif de serrage (3) monté sur celui-ci et formé par au moins deux bras (4) qui sont déplaçables l'un par rapport à l'autre en rapprochement et en éloignement, **caractérisée par** :
- un cadre d'encerclage (6) déplaçable le long du châssis (1), qui peut être amené depuis une position d'attente à extrémité du châssis (1) jusqu'à au moins deux positions de travail des deux côtés du dispositif de serrage (3), dans lequel
- le cadre d'encerclage (6) présente un diamètre intérieur au moins légèrement plus grand que les bras (4), déplacés l'un vers l'autre dans la position de serrage, du dispositif de serrage (3), de sorte que le cadre d'encerclage (6) peut être amené via le dispositif de serrage (3).

2. Cercleuse selon la revendication 1, **caractérisée en ce que** le châssis (1) présente une longueur qui correspond approximativement à celle du paquet à former.

3. Cercleuse selon la revendication 1 ou 2, **caractérisée en ce que**, dans la position d'attente, le cadre d'encerclage (6) se trouve dans un boîtier (5) qui est agencé à une extrémité du châssis (1).

4. Cercleuse selon la revendication 3, **caractérisée en ce que** le cadre d'encerclage (6) peut être amené par une plaque frontale dans un plan avec la paroi antérieure du boîtier (5), et le groupe d'entraînement du cadre d'encerclage (6) vient se placer à l'intérieur du boîtier (5).

5. Cercleuse selon l'une des revendications 1 à 4, **caractérisée en ce que** les deux bras (4) du dispositif de serrage (3) sont déplaçables chacun individuellement, de préférence par pivotement, depuis une position de réception ouverte pour le matériau à cercler jusque dans une position de serrage qui enserre le matériau.

6. Cercleuse selon l'une des revendications 1 à 5, **caractérisée en ce qu'**il est prévu à l'extrémité du châssis (1) vis-à-vis de la position d'attente du cadre d'encerclage (6) un dispositif de coupe pour limiter la longueur du paquet de matériau, de préférence une scie à chaîne.

7. Cercleuse selon la revendication 6, **caractérisée en ce qu'**il est prévu une scie à chaîne dont la longueur est choisie de telle façon que lors de déplacements autour d'un axe de pivotement latéralement par rapport au paquet, elle balaye la surface de section transversale du paquet.

8. Cercleuse selon l'une des revendications 1 à 7, **caractérisée en ce qu'**il est prévu une pluralité de dispositifs de serrage (3) les uns derrière les autres et à distance les uns des autres en direction longitudinale du châssis (1).

9. Cercleuse selon l'une des revendications 1 à 8, **caractérisée en ce que** les bras (4) sont conçus sous forme arquée, de préférence approximativement en forme de demi-cercle.

10. Cercleuse selon l'une des revendications 1 à 9, **caractérisée en ce qu'**il est prévu des entraînements électriques ou hydrauliques à titre d'entraînements de la cercleuse.

11. Cercleuse selon l'une des revendications 1 à 10, **caractérisée en ce que** la cercleuse est équipée d'un groupe de roulement.
